# EUROPÄISCHE PATENTSCHRIFT

(11) **EP 1 424 296 B1**
(45) Veröffentlichungstag und Bekanntmachung des Hinweises auf die Patenterteilung: **08.03.2006**
(21) Anmeldenummer: 03090365.2
(22) Anmeldetag: 24.10.2003
(51) Int. Cl.: B65G 47/64

(54) **Fördersystem für Güter, insbesondere Behälter für Gepäckstücke, und Steuerverfahren für das Fördersystem**
Conveying system for articles, especially containers for luggage, and control method for the conveying system
Système de transport d'articles, en particulier conteneurs pour bagages, et procédé de commande pour le système de transport

(30) Priorität: 27.11.2002 DE 10255344
(43) Veröffentlichungstag der Anmeldung: 02.06.2004
(73) Patentinhaber: SIEMENS AKTIENGESELLSCHAFT, 80333 München (DE)
(72) Erfinder: Brixius, Wolfgang, 91077 Neunkirchen A.Br. (DE); Gräfer, Dominik, 90427 Nürnberg (DE); Hoene, Albrecht, Dr., 91074 Herzogenaurach (DE)

(56) Entgegenhaltungen:
- WO-A-96/32205
- DE-A- 3 806 036
- US-A- 4 867 299
- US-B1- 6 394 257

## Beschreibung

Die Erfindung betrifft ein Fördersystem für Güter, insbesondere Behälter für Gepäckstücke, gemäß dem Oberbegriff des Anspruchs 1 und ein Steuerverfahren für das Fördersystem gemäß dem Oberbegriff des Anspruchs 8.

Bekannt sind Fördersysteme für Güter mit zwei oder mehreren Förderern, die übereinander in vertikal beabstandeten Ebenen angeordnet sind und zur Überbrückung des Abstands einen Lift verwenden, der einen horizontalen Liftförderer aufweist, welcher auf jeder Ebene mit dem zu dieser Ebene gehörenden Förderer eine Förderstrecke bildet. Die Güter werden in Förderrichtung der Förderstrecke entweder vom Liftförderer an den Förderer der Ebene übergeben oder umgekehrt von diesem übernommen. Eine Steuerung sorgt für eine störungsfreie Beförderung der Güter, wobei die Förderer erst gestartet werden, wenn der Liftförderer bezogen auf die jeweilige Ebene seine Endstellung erreicht hat.

Beispielsweise ist aus der US 4 867 299 ein solches Fördersystem bekannt, das zwei Förderer in vertikal beabstandeten Ebenen und zur Verbindung der beiden Ebenen einen vertikal verfahrbaren Lift mit einem Liftförderer aufweist.

Der Nachteil der bekannten Fördersysteme besteht darin, dass der Güterfluss durch den Lift verringert ist.

Die Aufgabe der Erfindung ist es, ein Fördersystem und ein zugehöriges Steuerverfahren für Güter anzugeben, welches einen hohen Güterdurchsatz aufweist.

Die Lösung dieser Aufgabe ist bezogen auf das Fördersystem durch die im Anspruch 1 und bezogen auf das Verfahren für das Fördersystem durch die im Anspruch 8 angegebenen Merkmale gegeben. Durch die kennzeichnenden Merkmale der Unteransprüche ist das Fördersystem in vorteilhafter Weise weiter ausgestaltet.

Die Lösung sieht bezogen auf das Fördersystem vor, dass der Steuerung mittels den Ebenen jeweils zugeordneten Signalisierungen jeweils signalisieren wird, dass der Lift eine Vorposition einer der Ebenen erreicht hat, die obere Vorposition wenn der Lift von oben kommend und die untere wenn er von unten kommend die Ebene anfährt, wobei die Beförderung der Güter bei Erreichen der Vorpositionen durch die Signalisierungen ausgelöst wird. Die Güterbeförderung wird also nicht erst bei Erreichen der endgültigen Position, sondern bei Passieren der Vorposition ausgelöst.

Bei einem kostengünstigen Fördersystem sind die Förderer und der Liftförderer jeweils von einem Antriebsmotor angetriebene endlosumlaufende Förderbänder.

Im einfachsten Falle sind die Signalisierungen als Sensoren ausgebildet, deren Überfahren signalisiert wird.

Kostengünstige Ausführungsformen der Sensoren sind Lichtschranken, Lichttaster, induktive Sensoren, mechanische Schalter oder Ultraschallsensoren.

Ein höherer Güterdurchsatz wird erreicht, wenn die Beförderung der Güter bei Erreichen der Vorpositionen gestartet wird.

Ein höherer Durchsatz kann insbesondere erzielt werden, wenn zur Beförderung der Güter bei Erreichen der oberen Vorposition der als Abförderer arbeitende Förderer der Förderstrecke und bei Erreichen der unteren Vorposition der als Zuförderer arbeitende Förderer gestartet wird.

Je nach Geschwindigkeit des Lifts kann das Starten der Beförderung auch nach einer vorgegebenen Verzögerungszeit erfolgen.

Dabei kann die Verzögerungszeit auch abhängig von der Anfahrgeschwindigkeit des Lifts gesteuert sein.

Die Lösung sieht bezogen auf das Verfahren für das Fördersystem vor, dass der Steuerung mittels den Ebenen jeweils zugeordneten Signalisierungen jeweils signalisieren wird, dass der Lift eine Vorposition einer der Ebenen erreicht hat, die obere Vorposition wenn der Lift von oben kommend und die untere wenn er von unten kommend die Ebene anfährt, wobei die Beförderung der Güter bei Erreichen der Vorpositionen durch die Signalisierungen ausgelöst wird.

Die Erfindung wird nachfolgend anhand einer Zeichnung beschrieben.

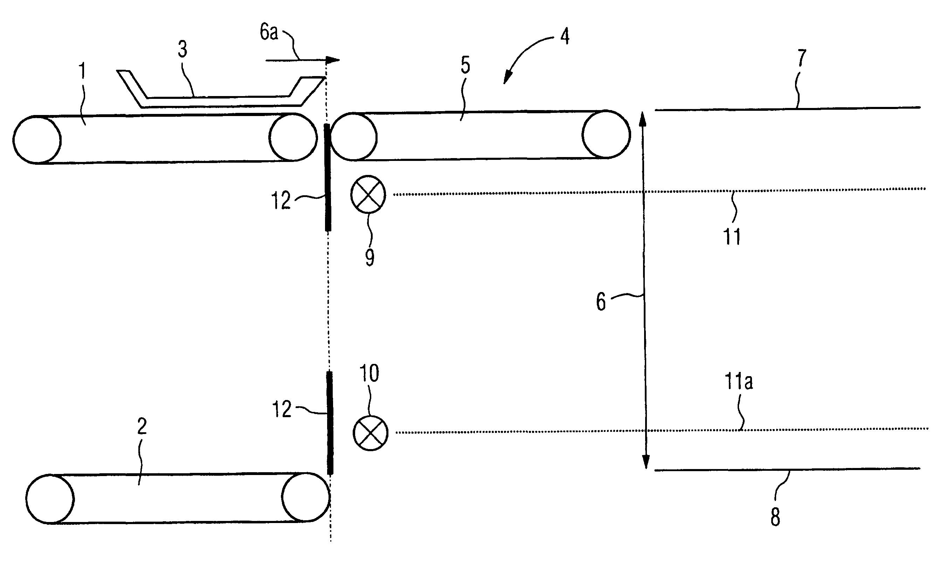

Die einzige Figur zeigt ein Fördersystem in einer schematischen Darstellung. Es weist zwei als Bandförderer ausgebildete Förderer 1, 2 auf, die vertikal übereinander in beabstandeten Ebenen fest angeordnet sind. Bezogen auf die Figur ist rechts neben den beiden Förderern 1, 2 ein Lift 4 mit einem ebenfalls als Förderband ausgebildeten Liftförderer 5 angeordnet, der sich in der Figur in einer oberen Vertikalposition 7, hier der oberen Endposition, befindet, welche durch eine durchgehende Linie dargestellt ist. Der Lift 4 ist zusammen mit dem Förderer 5 vertikal nach unten in eine untere Vertikalposition 8, hier der unteren Endposition, verfahrbar, was der Doppelpfeil 6 anzeigt.

Selbstverständlich können die beiden Förderer 1, 2 in den beabstandeten Ebenen auch zueinander versetzt angeordnet sein. Dabei wird die Förderrichtung beibehalten; der Liftförderer 5 muss nicht reversieren.

Eine nicht gezeigte Steuerung steuert das Verfahren des Lifts 4 zu einer der vorgegebenen Vertikalpositionen 7, 8.

In der oberen und unteren Vertikalposition 7, 8 bildet der Liftförderer 5 mit dem Förderer 1 bzw. 2 eine Förderstrecke, so dass in Förderrichtung jeweils Güter von dem einen Förderer 1, 2, 5 auf den anderen Förderer 1 bzw. 2 bzw. 5 übergeben werden können.

In der Figur bildet der Liftförderer 5 mit dem Förderer 1 in der oberen Vertikalposition 7 eine Förderstrecke, wobei ein Behälter 3 gerade auf den Liftförderer 5 des Lifts 4 befördert wird, wozu sich die beiden Förderer 1, 5 mit annähernd gleicher Geschwindigkeit bewegen. Die Bewegungsrichtung des Behälters 3 ist durch den Pfeil 6a angezeigt.

Beim Anfahren der oberen Vertikalposition 7 aus der unteren Vertikalposition 8 passiert der Lift 4 eine zur oberen Vertikalposition 7 gehörende Signalisierung 9 in Form einer Lichtschranke, die sich in einer unteren Vorposition 11 vor der vertikalposition 7 befindet. Dabei kann es sich bei der Lichtschranke auch um einen Lichttaster, einen induktiven Sensor, einen mechanischen Schalter, einen Ultraschallsensor und dergleichen handeln. Die Signalisierung 9 startet dann über die Steuerung sofort oder nach einer vorgegebenen Wartezeit den Förderer 1. Das Beschleunigen des Behälters 3 erfolgt auf diese Weise bereits bevor der Lift 4 seine Vertikalposition 7 erreicht. Der Behälter 3 kann so ohne Zeitverzögerung übernommen werden, wenn sich der Lift 4 in seiner Vertikalposition 7 befindet.

Genauso kann der den Behälter 3 in horizontaler Richtung bewegende Liftförderer 5 angehalten werden, während der Lift 4 bereits nach unten zu fahren beginnt.

Beim Anfahren der unteren Vertikalposition 8 passiert der Lift 4 die obere Vorposition 11a und damit die Signalisierung 10. Daraufhin wird der Liftförderer 5 gestartet, so dass die Übergabe des Behälters 3 beim Erreichen der unteren Vertikalposition 8 bereits in vollem Gange ist.

Die Steuerung der Förderer 1, 2, 5 erfolgt so, dass der Behälter 3 - während der Lift 4 seine jeweilige Vertikalposition 7, 8 erreicht - bereits mit der vorgesehenen Geschwindigkeit von dem jeweiligen Förderer 1, 2 oder 5 übergeben wird.

Bei mehr als zwei Ebenen umfasst jede Ebene, die von oben und unten angefahren werden kann, eine obere und eine untere Vorposition 11, 11a, wobei die zugehörigen Signalisierungen 9, 10 das Erreichen der oberen Vorposition 11a nur, signalisieren, wenn der Lift 4 von oben kommt, und das der unteren 11 nur, wenn er von unten kommt.

Zur Erhöhung der Sicherheit sind die beiden Sperren 12 vorgesehen, die durch den Lift 4 betätigt werden.

## Patentansprüche

1. Förderersystem für Güter, insbesondere Behälter (3) für Gepäckstücke,
mit zumindest zwei Förderern (1, 2), die in vertikal beabstandeten Ebenen angeordnet sind,
mit einem vertikal verfahrbaren Lift (4) mit einem Liftförderer (5), der in einer unteren Vertikalposition (8) mit dem unteren Förderer (2) und in einer oberen Vertikalposition (7) mit dem oberen Förderer (1) jeweils eine Förderstrecke bildet, auf der die Güter in Förderrichtung von einem Förderer (1, 2, 5) auf den anderen Förderer (1, 2, 5) übergeben werden, und
mit einer Steuerung, welche die Beförderung der Güter von dem und auf den Liftförderer (5) in Abhängigkeit von der Vertikalposition (7, 8) des Lifts (4) steuert,
**dadurch gekennzeichnet,**
**dass** die Steuerung Signalisierungen (9, 10) umfasst, welche den Ebenen jeweils zugeordnet sind und welche signalisieren, dass der Lift (4) eine Vorposition (11, 11a) der Ebene erreicht hat, die obere Vorposition (11a) wenn der Lift (4) von oben kommend und die untere (11) wenn er von unten kommend die Ebene anfährt, wobei die Beförderung der Güter bei Erreichen der Vorpositionen (11, 11a) durch die Signalisierungen (9, 10) ausgelöst wird.

2. Förderersystem nach Anspruch 1,
**dadurch gekennzeichnet,**
**dass** die Förderer (1, 2) und der Liftförderer (5) jeweils von einem Antriebsmotor angetriebene endlos umlaufende Förderbänder sind.

3. Förderersystem nach Anspruch 1 oder 2,
**dadurch gekennzeichnet,**
**dass** die Signalisierungen (9, 10) als Sensoren ausgebildet sind.

4. Förderersystem nach Anspruch 3,
**dadurch gekennzeichnet,**
**dass** die Sensoren als Lichtschranken, Lichttaster, induktive Sensoren oder Ultraschallsensoren ausgebildet sind.

5. Förderersystem nach einem der vorhergehenden Ansprüche,
**dadurch gekennzeichnet,**
**dass** zur Beförderung der Güter bei Erreichen der oberen Vorposition (11a) der als Abförderer arbeitende Förderer (1, 2) der Förderstrecke und bei Erreichen der unteren Vorposition (11a) der als Zuförderer arbeitende Förderer (1, 2) gestartet wird.

6. Förderersystem nach Anspruch 5,
**dadurch gekennzeichnet,**
**dass** das Starten der Beförderung nach einer vorgegebenen Verzögerungszeit unmittelbar nach dem Signalisieren erfolgt.

7. Förderersystem nach Anspruch 6,
**dadurch gekennzeichnet,**
**dass** die Verzögerungszeit abhängig ist von der Anfahrgeschwindigkeit des Lifts.

8. Verfahren zur Förderung von Gütern, insbesondere Behälter (3) für Gepäckstücke,
für ein Förderersystem
mit zumindest zwei Förderern (1, 2), die in vertikal beabstandeten Ebenen angeordnet sind,
mit einem vertikal verfahrbaren Lift (4) mit einem Liftförderer (5), der in einer unteren Vertikalposition (8) mit dem unteren Förderer (2) und in einer oberen Vertikalposition (7) mit dem oberen Förderer (1) jeweils eine Förderstrecke bildet, auf der die Güter in Förderrichtung von einem Förderer (1, 2, 5) auf den anderen Förderer (1, 2, 5) übergeben werden, und
mit einer Steuerung, welche die Beförderung der Güter von dem und auf den Liftförderer (5) in Abhängigkeit von der Vertikalposition (7, 8) des Lifts (4) steuert,
**dadurch gekennzeichnet,**
**dass** der Steuerung mittels den Ebenen jeweils zugeordneten Signalisierungen (9, 10) jeweils signalisieren wird, dass der Lift (4) eine Vorposition (11, 11a) einer der Ebenen erreicht hat, die obere Vorposition (11a) wenn der Lift (4) von oben kommend und die untere (11) wenn er von unten kommend die Ebene anfährt, wobei die Beförderung der Güter bei Erreichen der Vorpositionen (11, 11a) durch die Signalisierungen (9, 10) ausgelöst wird.

## Claims

1. Conveying system for articles, especially containers (3) for luggage,
having at least two conveyers (1, 2) which are arranged at vertically spaced levels,
having a vertically movable lift (4) having a lifting conveyor (5) which, in a lower vertical position (8) together with the lower conveyor (2) and, in an upper vertical position (7) together with the upper conveyor (1), in each case forms a conveying section, on which the articles are transferred from one conveyor (1, 2, 5) to the other conveyor (1, 2, 5) in the conveying direction, and
having a controller, which controls the conveyance of the articles from and onto the lifting conveyor (5) as a function of the vertical position (7, 8) of the lift (4),
**characterized**
**in that** the controller comprises signalling means (9, 10) which are respectively assigned to the levels and which signal the fact that the lift (4) has reached a pre-position (11, 11a) of the level, the upper pre-position (11a) when the lift (4) moves to the level coming from above and the lower (11) when it moves to the level coming from below, the conveyance of the articles being triggered by the signalling means (9, 10) when the pre-positions (11, 11a) are reached.

2. Conveying system according to Claim 1, **characterized in that** the conveyors (1, 2) and the lifting conveyor (5) are in each case endlessly circulating conveyor belts driven by a drive motor.

3. Conveying system according to Claim 1 or 2, **characterized in that** the signalling means (9, 10) are formed as sensors.

4. Conveying system according to Claim 3, **characterized in that** the sensors are formed as light barriers, light sensors, inductive sensors or ultrasonic sensors.

5. Conveying system according to one of the preceding claims, **characterized in that** for the purpose of conveying the goods, when the upper pre-position (11a) is reached, the conveyor (1, 2) of the conveying section operating as an output conveyor is started and, when the lower pre-position (11) is reached, the conveyor (1, 2) operating as a feed conveyor is started.

6. Conveying system according to Claim 5, **characterized in that** the starting of the conveyance is carried out after a predefined delay time immediately after the signalling.

7. Conveying system according to Claim 6, **characterized in that** the delay time depends on the approach speed of the lift.

8. Method for conveying articles, especially containers (3) for luggage,
for a conveying system
having at least two conveyers (1, 2) which are arranged at vertically spaced levels,
having a vertically movable lift (4) having a lifting conveyor (5) which, in a lower vertical position (8) together with the lower conveyor (2) and, in an upper vertical position (7) together with the upper conveyor (1), in each case forms a conveying section, on which the articles are transferred from one conveyor (1, 2, 5) to the other conveyor (1, 2, 5) in the conveying direction, and
having a controller, which controls the conveyance of the articles from and onto the lifting conveyor (5) as a function of the vertical position (7, 8) of the lift (4),
**characterized**
**in that** the controller is in each case signalled, by means of signalling means (9, 10) which are respectively assigned to the levels, the fact that the lift (4) has reached a pre-position (11, 11a) of one of the levels, the upper pre-position (11a) when the lift (4) moves to the level coming from above and the lower (11) when it moves to the level coming from below, the conveyance of the articles being triggered by the signalling means (9, 10) when the pre-positions (11, 11a) are reached.

## Revendications

1. Système de transport pour des marchandises, en particulier des conteneurs (3) pour des colis, comportant
- au moins deux transporteurs (1, 2) placés dans des plans verticaux à distance l'un de l'autre,
- un élévateur (4) mobile verticalement et muni d'un transporteur élévateur (5) qui, quand il est en position verticale (8) inférieure, forme respectivement un trajet de transport avec le transporteur (2) inférieur et quand il est en position verticale (7) supérieure avec le transporteur supérieur (1), les marchandises étant transférées sur le trajet de transport en direction de transport depuis l'un des transporteurs (1, 2, 5) sur l'autre transporteur (1, 2, 5) et
- une commande qui commande le transport des marchandises depuis le transporteur élévateur (5) et sur celui-ci, en fonction de la position verticale (7, 8) qu'a l'élévateur (4),
**caractérisé en ce que** la commande comprend des signalisations (9, 10) qui sont chacune associées aux plans et qui signalent que l'élévateur (4) a atteint une avant-position (11, 11a) du plan, l'avant-position supérieure (11a) quand l'élévateur (4) s'approche en venant du haut et l'avant-position inférieure (11) quand l'élévateur (4) s'approche en venant du bas, le transport des marchandises étant déclenché par les signalisations (9, 10) quand les avant-positions (11, 11a) sont atteintes.

2. Système de transport selon la revendication 1, **caractérisé en ce que** les transporteurs (1, 2) et le transporteur élévateur (5) sont chacun des bandes transporteuses qui circulent sans fin et sont entraînées par un moteur d'entraînement.

3. Système de transport selon la revendication 1 ou 2, **caractérisé en ce que** les signalisations (9, 10) prennent la forme de capteurs.

4. Système de transport selon la revendication 3, **caractérisé en ce que** les capteurs sont des cellules photo-électriques, des détecteurs à éclairage mobile, des capteurs inductifs ou des capteurs à ultrasons.

5. Système de transport selon l'une des revendications précédentes, **caractérisé en ce que**, pour transporter les marchandises quand l'avant-position supérieure (11a) est atteinte, on lance le transporteur (1, 2) - du trajet de transport - qui sert de transporteur de sortie et quand l'avant-position inférieure (11) est atteinte on lance le transporteur (1, 2) qui sert de transporteur d'entrée.

6. Système de transport selon la revendication 5, **caractérisé en ce que** le transport est lancé immédiatement après la signalisation après un temps de retard prédéfini.

7. Système de transport selon la revendication 6, **caractérisé en ce que** le temps de retard dépend de la vitesse à laquelle l'élévateur s'approche.

8. Procédé pour transporter des marchandises, en particulier des conteneurs (3) pour des colis, pour un système de transport comportant
- au moins deux transporteurs (1, 2) placés dans des plans verticaux à distance l'un de l'autre,
- un élévateur (4) mobile verticalement et muni d'un transporteur élévateur (5) qui, quand il est en position verticale (8) inférieure, forme respectivement un trajet de transport avec le transporteur (2) inférieur et quand il est en position verticale (7) supérieure avec le transporteur supérieur (1), les marchandises étant transférées sur le trajet de transport en direction de transport depuis l'un des transporteurs (1, 2, 5) sur l'autre transporteur (1, 2, 5) et
- une commande qui commande le transport des marchandises depuis le transporteur élévateur (5) et sur celui-ci, en fonction de la position verticale (7, 8) qu'a l'élévateur (4),
**caractérisé en ce qu'**on signale à la commande à l'aide de signalisations (9, 10), chacune associée aux plans, que l'élévateur (4) a atteint une avant-position (11, 11a) d'un des plans, l'avant-position supérieure (11a) quand l'élévateur (4) s'approche en venant du haut et l'avant-position inférieure (11) quand l'élévateur (4) s'approche en venant du bas, le transport des marchandises étant déclenché par les signalisations (9, 10) quand les avant-positions (11, 11a) sont atteintes.
